Europäisches Patentamt

European Patent Office

Office européen des brevets

(19)

(11) Numéro de publication: **0 095 962**
**B1**

(12) **FASCICULE DE BREVET EUROPEEN**

(45) Date de publication du fascicule du brevet:
11.06.86

(51) Int. Cl.⁴: **H 02 K 15/06**, H 02 K 3/12, H 02 K 3/50

(21) Numéro de dépôt: 83400990.4

(22) Date de dépôt: 17.05.83

(54) Procédé de formage de chignons sur un stator de moteur électrique, et stator de moteur électrique ainsi réalisé.

(30) Priorité: 27.05.82 FR 8209254

(43) Date de publication de la demande:
07.12.83 Bulletin 83/49

(45) Mention de la délivrance du brevet:
11.06.86 Bulletin 86/24

(84) Etats contractants désignés:
BE CH DE GB IT LI NL

(56) Documents cités:
DE - A - 2 039 114
DE - A - 2 117 213
US - A - 3 593 405
US - A - 3 869 629
US - A - 3 984 712
US - A - 4 227 108

PATENTS ABSTRACTS OF JAPAN, vol. 6, no.
254(E-148)(1132), 14 décembre 1982, page 105E148

(73) Titulaire: POMPES SALMSON Société Anonyme à directoire dite:, 44 Avenue de Chatou Tour Corosa, F-92500 Rueil Malmaison (FR)

(72) Inventeur: Delvallez, Michel, THOMSON-CSF SCPI 173, bld Haussmann, F-75379 Paris Cedex 08 (FR)
Inventeur: Trian, Hervé, THOMSON-CSF SCPI 173, bld Haussmann, F-75379 Paris Cedex 08 (FR)

(74) Mandataire: Hirsch, Marc-Roger et al, 34 rue de Bassano, F-75008 Paris (FR)

LIBER, STOCKHOLM 1986

**Description**

La présente invention concerne un procédéde formage de chignons sur un stator de moteur électrique. Elle concerne aussi un stator de moteur électrique réalisé selon le présent procédé. L'invention trouve application dans le domaine des moteurs électriques de petites et moyennes puissances.

Les stators de moteurs électriques comportent deux parties principales. La première partie est constitueée par un cylindre percé d'un trou appelé alésage statorique et constitué d'une carcasse de tôles magnétiques empilées. La seconde partie est constituée par un ensemble de bobines réalisées avec des fils conducteurs. La production en série de moteurs à stators bobinés oblige à réaliser des opérations d'assemblage automatique de ces constituants. Il est ainsi connu un certain nombre de procédés et de machines pour réaliser l'introduction des bobines dans la carcasse du stator et le formage des extrémités des bobines appelées aussi chignons.

Dans l'art antérieur, on connaît notamment du document US–A–3 593 405 des presses de formage qui font, pour chacun des chignons, un formage intérieur et un formage extérieur.

Dans le document DE–A–2 117 213, les enroulement statoriques sont tirés d'un côté du paquet de tôles statoriques de manière à constituer un chignon de taille réduite dégageant largement l'alésage statorique pour l'installation du rotor. Selon ce document, si l'on réduit la quantité de conducteurs nécessaires à la réalisation des enroulements et le nombre de formages, il faut cependant former le chignon opposé. De plus, pour dégager largement l'ouverture dans le chignon réduit, il faut que les têtes de bobines de ce chignon soient tendues à l'extrême pour être rectilignes, ce qui les fragilise. La présente invention apporte remède aux inconvénients précités et des avantages particuliers.

En effet la présente invention qui concerne un procédé de formage de chignons sur un stator de moteur électrique, du genre consistant à introduire plusieurs bobines dans des encoches d'un alésage statorique puis à tirer celles-ci de manière à réaliser deux chignons de tailles différentes, le chignon de taille la plus petite étant laissé brut d'insertion après montage des enroulements, est caractérisée en ce que l'on forme ensuite le chignon le plus important qui comporte les extrémités des fils de sortie par l'introduction à force d'une matrice dans l'alésage statorique où elle reste coincée.

L'invention concerne aussi un stator bobiné pour moteur électrique dont le chignon supérieur est formé par le procédé selon la revendication 1, caractérisé en ce que la matrice de formage comprend un corps cylindrique et un rebord fixé au corps cylindrique dont la face inférieure est apte à écraser, lors de l'introduction de la matrice, le chignon supérieur.

D'autres caractéristiques et avantages selon la présente invention seront dégagés à l'aide de la description et des figures annexées qui sont:

– la figure 1 : un schéma d'une bobine,
– la figure 2 : un coupe d'un stator après l'opération de formage selon la présente invention,
– les figures 3a et 3b : un dessin en perspective d'une première variante d'une matrice selon l'invention,
– la figure 4 : un dessin en perspective d'une seconde variante d'une matrice selon l'invention,

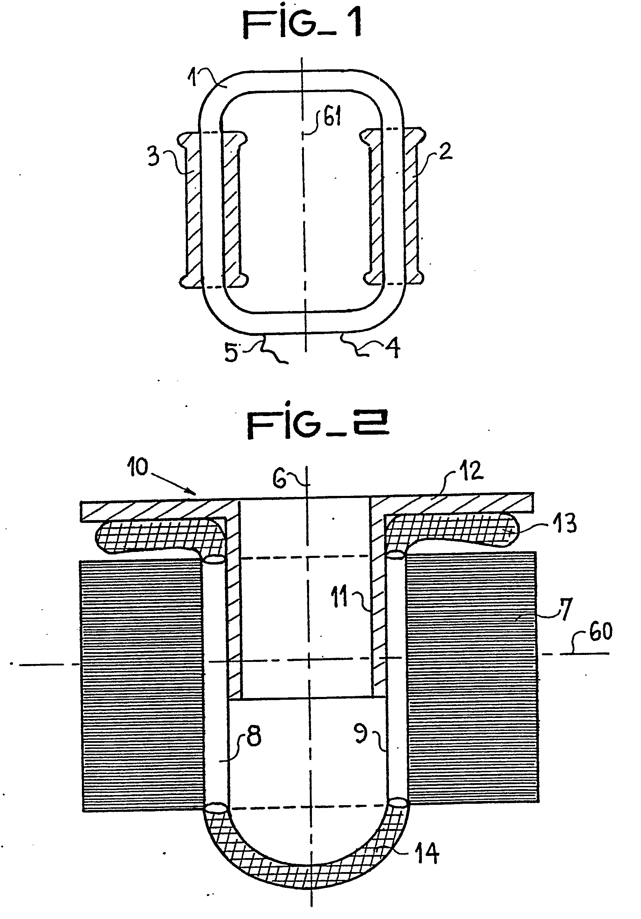

– la figure 5 : un dessin en perspective d(une troisième variante d'une matrice selon l'invention, A la figure 1, on a représenté une bobine complète prête à être installée dans les encoches de la carcasse statorique. Cette bobine comporte un enroulement 1 constiué d'un certain nombre de spires de fils de cuivre émaillé. Avant son insertion dans le stator du moteur, la bobine est maintenue en forme par deux manchons 2 et 3 répartis de part et d'autre du futur axe de rotation 61 du moteur. Ces manchons 2 et 3 protègent les fils de cuivre, une fois l'ensemble des bobines installé dans les encoches du stator. D'autre part, deux conducteurs d'accès 4, 5 sortent de la bobine et sont disponibles pour l'amenée et la sortie du courant dans la bobine.

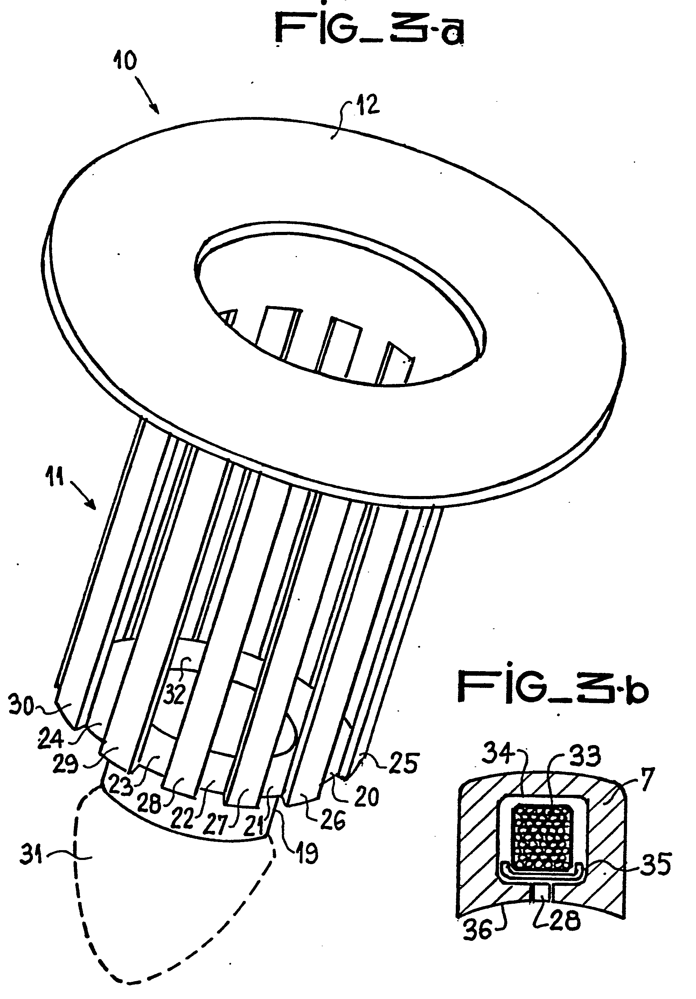

A la figure 2, on a représenté un stator bobiné selon la présente invention. La vue, est une vue en coupe selon un plan passant par l'axe de rotation 6 du moteur et par deux encoches diamétrales. La partie cylindrique et métallique du stator est constituée par un empilement de tôles magnétiques 7 maintenues par un moyen non représenté et connu. Autour de l'axe moteur 6 est percé un alésage statorique en forme de cylindre dans lequel viendra se placer le rotor du moteur électrique. La paroi de l'alésage est percé d'encoches 8, 9 allongées le long de génératrices de sa forme cylindrique. Chaque bobine est installée dans une paire d'encoches. Chacune des deux encoches est symétrique de l'autre par rapport à l'axe 6 central du stator 7. A la fabrication du moteur, l'ensemble des bobines est placé dans une machine à insérer le bobinage dans l'alésage statorique.

Chaque bobine comporte, hors du stator 7, une tête supérieure et une tête inférieure. Une fois l'ensemble des bobines installées, on appelle chignon l'enchevêtrement des têtes de bobines d'un même côté. A la figure 2, on remarque un chignon supérieur 13 et un chignon inférieur 14. Le chignon inférieur 14 est celui qui est disposé du côté du stator 7 opposé à celui par lequel le bobinage est introduit. Il est donc constitué par une répartition tendue de toutes les têtes de bobines, par exemple en forme de coupole sphérique. La caractéristique principale de l'invention est que le chignon inférieur 14 est brut d'insertion, c'est à dire qu'on lui laisse la forme fermée tendue qu'il a à la fin de l'opération d'insertion.

Selon une autre caractéristique du procédé de l'invention, on réalise le formage (notamment par pressage) du chignon supérieur 13. qui, dans ce cas est de dimensions normales tandis que le chignon inférieur 14, brut d'insertion, est de dimensions réduites. La machine à insérer les bobines réalise une répartition asymétrique des têtes de bobines. Elles dépassent plus du coté supérieur (celui du chignon 13) du stator 7 que de l'autre coté (inférieur, celui de chignon 14). Ceci permet d'avoir des chignons de bobines statoriques bien maintenues en forme et, en même temps, de réduire le temps de fabrication du moteur et de réduire la quantité de cuivre utilisé. Ces deux derniers avantages sont considérables quand le moteur est fabriqué en grandes séries notamment sur des chaînes de fabrication automatique. L'un des résultats notables est la diminution du coût de fabrication.

Selon une autre caractéristique de l'invention, le formage du chignon supérieur 13, celui dont les dimensions sont les plus importantes, est réalisé par l'introduction à force d'une matrice de formage 10 dont la forme fondamentale comprend un corps cylindrique 11 surmonté d'un plateau 12.

Une étape du procédé selon l'invention consiste à dégager largement l'ouverture du faisceau de bobines au chignon supérieur pour permettre l'introduction de la matrice 10. Le diamétre du corps cylindrique 11 est d'une dimension telle qu'il entre à force à l'intérieur du stator. Son épaisseur est inférieure à l'entrefer statorrotor pour ne pas gêner la rotation du rotor quand celui-ci est installé. Quand le moteur est peu ou pas soumis à des contraintes internes, contrairement au cas des moteurs à rotor noyé qui transitent de forts débits de fluides, alors la matrice 10 peut servir de protection étanche à l'alésage statorique. Elle permet alors d'éviter l'usage d'un tube d'entrefer par exemple métallique qui nécessite l'usage d'une pièce et d'une opération de montage supplémentaire. Le rebord 12, ou plateau de la matrice, vient écraser le chignon supérieur 13 constitué par l'ensemble de toutes les têtes supérieures des bobines installées dans le stator.

Le rebord 12 comporte une face inférieure en contact avec le chignon supérieur. Quand, par le moyen d'une presse, la matrice entre à force, la face inférieure vient écraser le chignon et reste aussi en position. Elle assure alors une double fonction de protection et de maintien mécanique du chignon 13.

Enfin le chignon inférieur 14 des bobines est libre de formage.

Dans le cas où la matrice 10 de formage sert aussi de tube d'entrefer, le corps cylindrique 11 doit s'étendre au moins jusqu'au début du chignon inférieur 14 pour couvrir tout l'espace de l'alésage statorique. Le corps cylindrique 11 peut, notamment dans ce cas, comporter aussi une extrémité basse, non représentée au dessin, d'une forme telle qu'elle épouse celle intérieure du chignon inférieur 14, brut d'insertion et non formé.

A la figure 3a, on a représenté une variante de la forme principale de la matrice. Le plateau ou rebord 12 est inchangé. Par exemple, comme représenté ici, il peut avoir la forme d'un disque circulaire percé d'un trou au droit de l'alésage statorique. Le corps cylindrique 11 qui s'étend au moins jusqu'au fond de l'alésage statorique est purvu de rainures 20–24 séparées par des barres 25–30 qui pénètrent chacune dans une encoche statorique. La base des barres 25–30 est montée sur un disque 32 terminé par un cylindre 19 concentrique à l'axe 6 du moteur, destiné à ménager une ouverture dans le chignon 14 inférieur non formé de façon à ce que l'arbre moteur puisse ressortir du chignon. Pour celà, au pressage de la matrice 10 pour le formage la machine de pressage qui porte la matrice 10 porte un outil qui pénètre à l'intérieur du corps cylindrique 11 et du cylindre 19 et dont l'extrémité est garnie d'un doigt 31, pointu, destiné à ouvrir le chignon 14 inférieur le long de l'axe 6 moteur, en écartant les bobines.

Cette variante permet que la matrice 10 n'occupe pas l'entrefer rotor-stator. Elle permet aussi de fournir un moyen pour contenir des bobines dans leurs encoches puisque les barres 25–30 viennent boucher les encoches statoriques. A la figure 3b on a représenté une coupe partielle du stator 7 dans un plan perpendiculaire à l'axe 6 du moteur. Ménagée dans la carcasse statorique 7, l'encoche 34 débouche sur la face cylindrique 36 de l'alésage statorique. Classiquement, la bobine 33 est installée dans son encoche 34 fermée par une cale de fond d'encoche 35. Une barre 28 du corps cylindrique 11 est installée à l'ouverture de l'encoche 34 sur l'alésage statorique. Elle permet ainsi un moyen efficace pour contenir la bobine dans son encoche. Ainsi, il est possible dans de nombreuses applications de supprimer les cales de fond d'encoches par la matrice 10 représentée figure 3a.

D'autre part, la matrice 10, exécutée sous cette forme, peut aussi coopérer avec un tube d'entrefer, par exemple métallique, de façon à réaliser une étanchéité parfaite du stator par rapport à des flux fluides qui traversent un moteur notamment à rotor noyé. Pour celà, la matrice 10, ou du moins son corps cylindrique 11, peut être doublée intérieurement d'un tube cylindrique qui sert de tube d'entrefer. Dans un exemple de réalisation, le tube d'entrefer est soudé à la matrice 10 et inséré en même temps qu'elle dans l'alésage statorique. Enfin, quand la matrice 10 porte aussi le cylindre 19, elle permet, en ménageant une ouverture dans le chignon, de sortir l'axe moteur pour des utilisations spéciales où l'on a besoin des deux extrémités de l'arbre moteur. Cette solution est à retenir aussi quand les paliers de support de l'arbre moteur sont disposés hors des chignons. Le disque 32 qui sert de base d'assemblage et de cohésion aux barres 25–30 du corps cylindrique 11 peut être remplacé par une coupole sphérique qui ferme le fond du chignon 14. Elle peut comporter aussi un cylindre 19 d'ouverture du chignon 14 pour passage de l'arbre moteur.

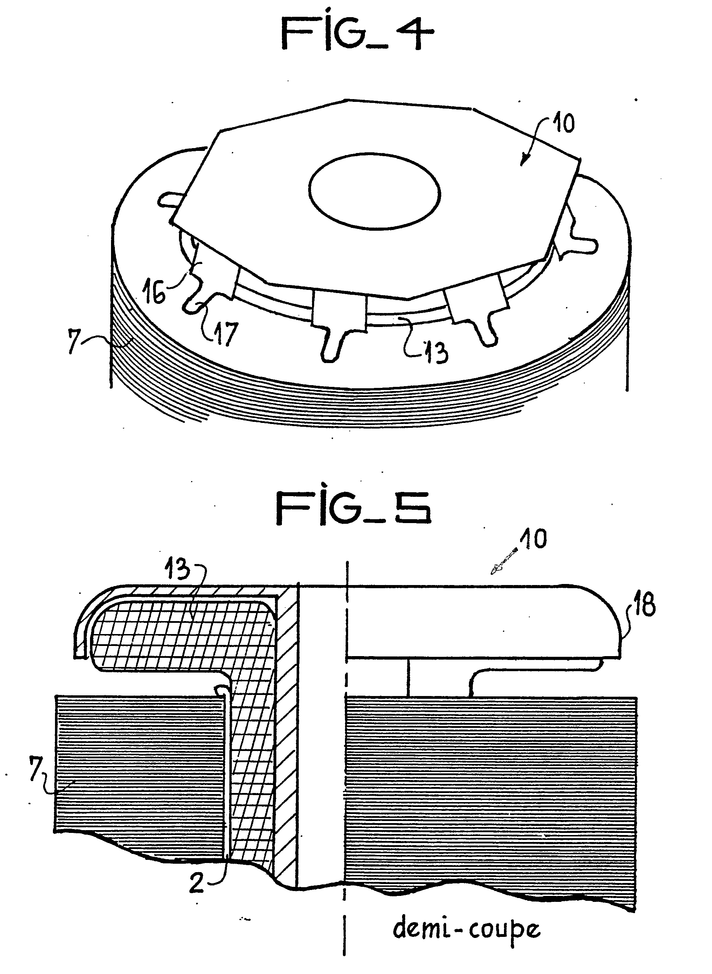

Aux figures 4 et 5 on a représenté deux formes particulières de rebord 12. A la figure 4, les bords du plateau 12 sont munis d'oreilles rabattables 16 munies d'un moyen de fixation 17 de l'oreille sur le bord de la carcasse statorique 7.

A la figure 5, le rebord 12 qui sert à former le chignon 13, comporte une jupe 18 qui permet d'entourer complètement le chignon. Cette disposition permet de limiter les opérations de fabrication puisque l'englobement du chignon est réalisé naturellement à la fin du pressage de la matrice 10.

Un premier avantage de ces deux variantes est de permettre une protection mécanique du chignon supérieur 13, même de sa partie latérale. Elle évite ainsi l'opération de frettage longue et coûteuse. On obtient ainsi une bonne maîtrise dimensionnelle du diamètre extérieur du chignon supérieur ainsi qu'une bonne protection mécanique de celui-ci.

## Revendications

1. Procédé de formage de chignons (13, 14) sur un stator (7) de moteur électrique, du genre consistant à introduire plusieurs bobines dans des encoches (8, 9) d'un alésage statorique puis à tirer celles-ci de manière à réaliser deux chignons de tailles différentes, le chignon de taille la plus petite étant laissé brut d'insertion après montage des enroulements, caractérisé en ce que l'on forme ensuite le chignon le plus important (13) qui comporte les extrémités des fils de sortie par l'introduction à force d'une matrice (10) dans l'alésage statorique (6) où elle reste coincée.

2. Stator bobiné pour moteur électrique dont le chignon supérieur (13) est formé par le procédé selon la revendication 1, caractérisé en ce que la matrice de formage (10) comprend un corps cylindrique (11), et un rebord (12) fixé au corps cylindrique (11) dont la face inférieure est apte à écraser, lors de l'introduction de la matrice, le chignon supérieur (13).

3. Stator selon la revendication 2, caractérisé en ce que le corps cylindrique (11) de la matrice (10) est pourvu de rainures (20–24) séparées par des barres (25–30), chaque barre (25–30) servant à obturer le fond de chaque encoche statorique, une fois le bobinage inséré.

4. Stator selon la revendiaction 3, caractérisé en ce que la parite inférieure du corps cylindrique (11) s'étend jusqu'à la fin de la carcasse statorique et comporte un corps de liaison (32), comme un disque ou une coupole sphéerique, percé d'une ouverture autour de l'axe (6) du moteur, limitée par un cylindre (19) qui ménage une ouverture dans le chignon inférieur (14) non formé, l'ouverture du chignon (14) étant dégagée par un doigt (31) amovible à l'insertion des bobinages.

5. Stator selon l'une revendications 2 à 4, caractérisé en ce que le plateau (12) est de forme englobant les bords du chignon (13) supérieur formé.

6. Stator selon la revendiaction 5, caractérisé en ce que le bord enveloppant est une jupe (18).

7. Stator selon la revendication 5, caractérisé en ce que le bord enveloppant est constitué par une pluralité d'oreilles rabattables (16) munies chacune d'un moyen de fixation (17) de l'oreille rabattue au bord de la carcasse statorique (7).

## Patentansprüche

1. Verfahren zur Herstellung von Wickelköpfen (13, 14) stator (7) eines Elektromotors, bei dem mehrere Spulen in Ausnehmungen (8, 9) einer Statorbohrung eingetzt und diese Spulen sodann derart gezogen werden, dass sie zwei Wickelköpfe unterschiedlicher Abmessungen bilden, wobei der kleinere Wickelkopf in seinem urspünglichen Montagezustand nach Anbringung der Wicklungen belassen wird, dadurch gekennzeichnet, dass hiernach der die Enden der Ausgangsleiter aufweisende grössere Wickelkopf (13) durch Zwangseinführung einer Matrize (10) in die Statorbohrung (6) geformt wird, wobei die Matrize in dieser Bohrung festgeklemmt verbleibt.

2. Wicklungsstator für einen Elektromotor, dessen oberer Wickelkopf (13) gemäss des Verfahrens nach Anspruch 1 hergestellt ist, dadurch gekennzeichnet, dass die Formmatrize (10) einen zylindrischen Körper (11), sowie einen an diesem zylindrischen Körper (11) befestigten Flansch (12) aufweist, durch dessen untere Fläche der obere Wickelkopf (13) beim Einführen der Matrize zusammenstauchbar ist.

3. Stator nach Anspruck 2, dadurch gekennzeichnet, dass der zylindrische Körper (11) der Matrize (10) mit durch Stangen (25–30) voneinander getrennten Spalten (20–24) ausgebildet ist, wobei jede Stange (25–30) dazu dient, den Boden jeder Statorausnehmung zu verschliessen, wenn die Wicklung eingebracht ist.

4. Stator nach Anspruch 3, dadurch gekennzeichnet, dass der untere Teil des zylindrischen Körpers (11) sich bis zum Ende des Statorgehäuses erstreckt und einen Verbindungskörper (32), wie sphärische Kuppel oder Scheibe, die mit einer die Achse (6) des Motors umgebenden Offnung versehen ist, welche durch einen im nicht geformten unteren Wickelkopf (14) eine Offnung bildenden Zylinder (19) begrenzt ist, wobei die Offnung des Wickelkopfs (14) durch einen bei der Einführung der Wicklungen entfernbaren Finger (31) freigegeben wird.

5. Stator nach einem der Ansprüche 2 bis 4, dadurch gekennzeichnet, dass die Platte (12) derart geformt ist, dass die Ränder des oberen geformten Wickelkopfes (13) einschliesst.

6. Stator nach Anspruch 5, dadurch gekennzeichnet, dass der umfassende Rand ein Mantel (18) ist.

7. Stator nach Anspruch 5, dadurch gekennzeichnet, dass der umfassende Rand durch eine Mehrzahl von umbiegbaren Lappen (16) gebildet ist, wobei jeder Lappen Mittel (17) zu seiner Befestigung am Rand des Statorgehäuses (7) aufweist.

## Claims

1. Process for forming winding heads (13, 14) on a stator (7) of an electrical motor, of the type consisting of introducing several coils into recesses (8, 9) of a stator boring and then drawing them in such a way as to achieve two winding heads of different dimensions, the smaller-sized winding head being left rough as inserted after mounting of the coils, characterized in that the larger-sized winding head (13) is thereafter formed which comprises the ends of outlet cables through the introduction by force of a matrix (10) into the stator boring (6) where it remains wedged.

2. Wound stator for an electrical motor of which the upper winding head (13) is formed by the process according to claim 1, characterized in that the forming matrix (10) comprises a cylindrical body (11) and a flange (12) fixed to the cylindrical body (11), the lower face of which is adapted to crush, the upper winding head (13), during introduction of the matrix.

3. Stator according to claim 2, characterized in that the cylindrical body (11) of the matrix (10) is provided with grooves (20–24) separated by bars (25–30), each bar (25–30) acting to seal the bottom of each stator recess, once the winding has been inserted.

4. Stator according to claim 3, characterized in that the lower part of the cylindrical body (11) extends up to the end of the stator frame and comprises a connecting body (32), such as a disc o a spherical dome, bored with an opening about the axis (6) of the motor, delimited by a cylinder (19) that provides an opening in the lower non-formed winding head (14), the opening of the winding hea( (14) being cleared by a removable finger upon the insertion of the windings.

5. Stator according to one of claims 2 and 4, characterized in that the plate (12) has a form encompassing the edges of the upper formed winding head (13).

6. Stator according to claim 5, characterized in that the enveloping edge is a skirt (18).

7. Stator according to claim 3, characterized in that the enveloping edge is constituted by a plurality of foldable ears (16) each proveded with means (17) of attaching the folded ear onto the edge of the stator frame (7).

# FIG_1

1

61

3

2

5 4

# FIG_2

10

6

12

13

11

7

60

8

9

14

FIG_3·a

FIG_3·b

# FIG_4

10

16

17

7

13

# FIG_5

13

10

18

7

2

demi-coupe